# EUROPEAN PATENT SPECIFICATION

(11) **EP 2 144 040 B1**
(45) Date of publication and mention of the grant of the patent: **15.06.2011**
(21) Application number: 08012615.4
(22) Date of filing: 11.07.2008
(51) Int. Cl.: G01D 4/00

(54) **A method and a system for decentralised processing of data streams**
Verfahren und System für die dezentrale Verarbeitung von Datenströmen
Procédé et système pour traitement décentralisé de flux de données

(43) Date of publication of application: 13.01.2010
(73) Proprietor: Siemens Aktiengesellschaft, 80333 München (DE)
(72) Inventor: Southall, Alan, 81247 München (DE)

(56) References cited:
- WO-A-01/99465
- WO-A-2006/102172

## Description

The invention relates to a system and a method for decentralised processing of data streams generated by a plurality of devices installed in a power distribution grid.

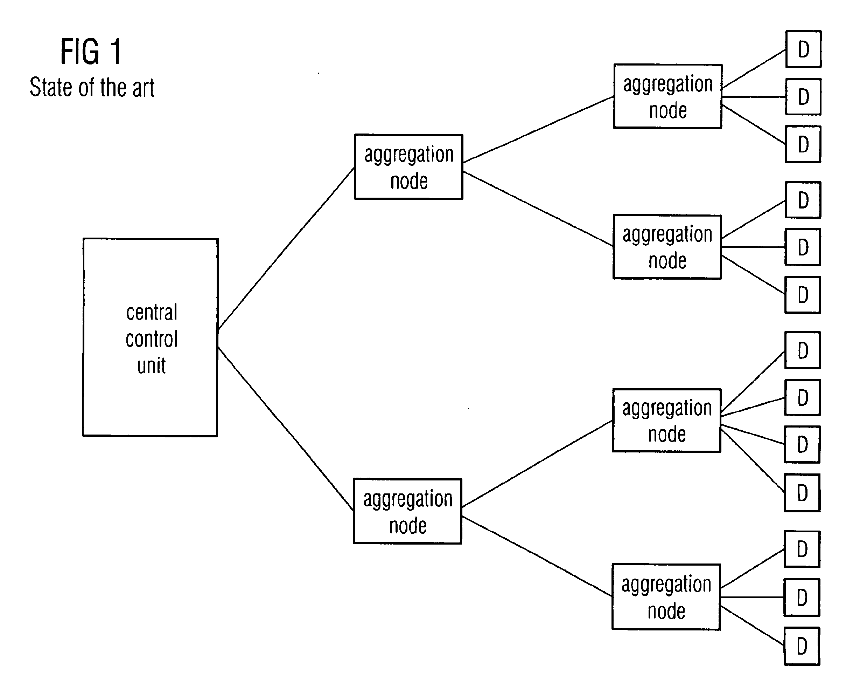

In a conventional system for processing of data streams generated by devices installed in a power distribution grid such as energy smart meters the data streams are aggregated at aggregation nodes before the data streams reach a central control unit as illustrated in Fig. 1. The central control unit is connected to a plurality of devices D via a hierarchy of aggregation nodes comprising a varying number of hierarchy levels. The devices D can be formed by energy meters or sensors generating a large amount of sensor data. The aggregation nodes of the lowest hierarchy level can be integrated into local transformers. Other aggregation nodes can be formed by substations of the power distribution grid.

WO A2 2006/102172 and WO A2 01/99465 both disclose systems in which data collectors collect data streams from groups of smart utility meters, before aggregating these data streams and passing them on to a central location.

As can be seen from Fig. 1 the central control unit receives a large quantity of data from a plurality of devices via the aggregation nodes. This high volume of data is difficult to handle for the central control unit and potentially fault prone. Furthermore, in case that a communication link between two aggregation nodes is disconnected the central control unit does not receive data from several devices D connected to the central control unit over a communication path comprising the interrupted communication link. In this case the central unit cannot react in time to a situation occurring in the power distribution grid. For example, in the devices D are formed by energy meters and a communication link is interrupted the central control unit may not detect a load peak occurring in a section of the power distribution grid and cannot react to such a load peak. The conventional system is not robust against interruptions of communication links especially between aggregation nodes of high hierarchy levels.

Accordingly, it is an objective of the present invention to provide a method and a system which are robust against link interruptions and which guarantee a fast reaction to changes in a power distribution grid.

This objective is achieved by a system comprising the features of claim 1 and a method comprising the features of claim 8.

In the following embodiments of system and method according to the present invention are described with reference to the enclosed figures:
- Fig. 1: shows a block diagram of a conventional system for processing data streams according to the state of the art;
- Fig. 2: shows an example for a conventional system for processing data streams;
- Fig. 3: shows an exemplary embodiment of a system for decentral processing of data streams according to the present invention.

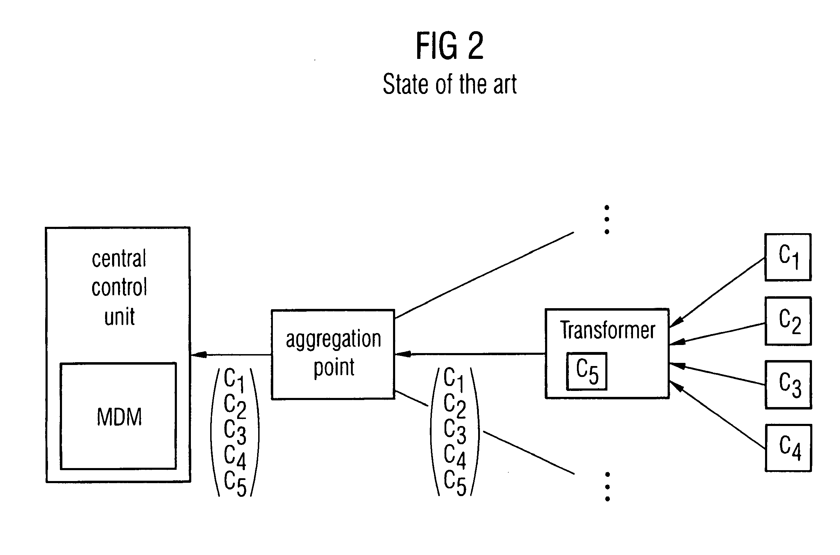

A conventional system for processing of data streams as shown in Fig. 1 aggregates data in aggregation nodes before they are processed by a central command and control unit as illustrated by the example of Fig. 2. In the example of Fig. 2 the devices are formed by smart meters or energy counters each providing a counter value C. Each counter or energy meter measures the energy drawn by the user from the power distribution grid. These smart meters are connected to a transformer. For example, the energy meters or counters C1 - C4 are energy meters of different users living in the same building. Within the transformer of the building a separate counter C5 or energy meter is implemented and detects the aggregated energy consumption of all users in the building. In the conventional system of Fig. 2 the transformer, i.e. the aggregation node of the first hierarchy level, sends the data stream to the next aggregation node of the hierarchy which in turn forwards the data stream via further aggregation nodes to a central control unit comprising a Meter-Data-Management-(MDM-)System. In the given example the Meter-Data-Management-System of the central control unit receives in the simple example five different counter values C1 - C5 and performs an evaluation of the data. For example, the central unit sums up the counter values of the four different counters C1 - C4 and compares the sum to the counter value C5. Under normal circumstances the aggregated value of the different counters C1, C2, C3, C4 should be identical with the counter value of the counter C5. However, in a situation when a further unknown person is drawing energy from the power distribution grid this will be detected by the Meter-Data-Management-System in the given example since in this case the counter value C5 is bigger than the sum of the individual counters C1 + C2 + C3 + C4. In this way thief drawing energy for the grid can be detected.

Fig. 2 is only a simple example and a plurality of different other and by far more complicated algorithms are performed by the Meter-Data-Management-System to react to different situations in the power distribution grid and for evaluating many data streams coming from a plurality of sensors or devices. For example, in case of 5.000 data management units generating 128 kbit/s the central control unit must be able to receive and process 640 mbit/s, 20 hours a day at 7 days a week, 365 days per year.

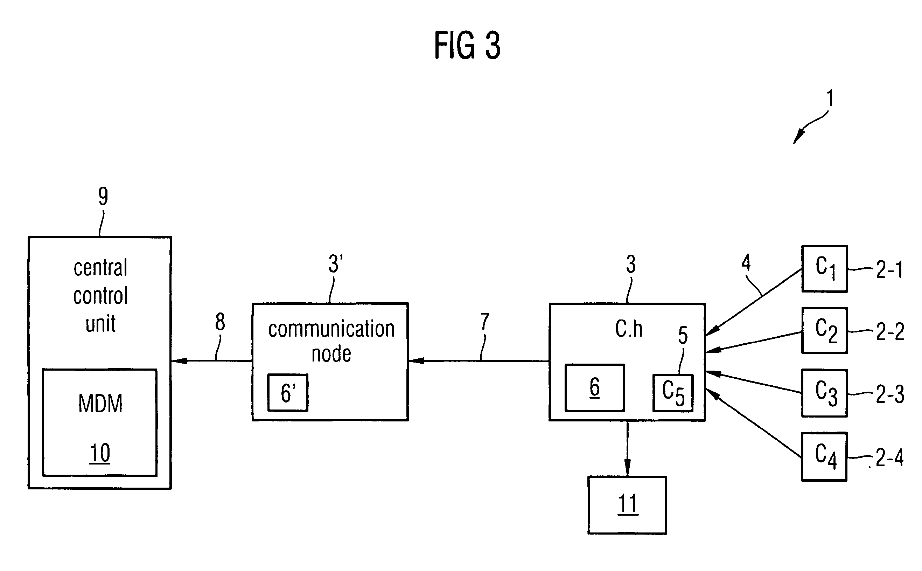

Fig. 3 shows an exemplary embodiment of a system 1 for a decentral processing of data streams according to the present invention handling the same situation as the conventional system in Fig. 2. The exemplary embodiment of Fig. 3 comprises devices 2-1, 2-2, 2-3, 2-4 which are installed in a power distribution grid and provide sensor data. The devices 2-1, 2-2, 2-3, 2-4 are, for example, energy meters measuring the energy drawn by a user within a building. The counter values C1 to C4 of the energy meters 2 are applied to a communication node 3 which can be formed within a transformer. The transformer forms a communication node of the lowest level within a hierarchy of communication nodes.

The communication link between the energy meters 2 and the transformer 3 can be formed by a data line 4 or a data bus. In an alternative embodiment the communication link 4 is formed by a power line connecting the transformer 3 to the energy meter 2.

The communication node 3 comprises in the given example a counter 5 and a data processing unit 6. The data processing unit 6 can be formed by a microprocessor or a CPU.

In an alternative embodiment the data processing unit is hardwired and can be formed by an ASIC. The data processing unit 6 can run in a possible embodiment a program comprising a counter 5 and variables for the counter values C1 - C4. In the given example the processing unit 6 of the communication node 3 processes the received data, i.e. the counter values C1, C2, C3, C4 and the counter value C5 of an energy meter within the transformer node 3. If C1 + C2 + C3 + C4 is identical with C5 the communication node recognizes that the counter values correspond to each other and no unauthorized person has drawn energy from the power distribution grid. In contrast if the aggregated counter values C1 - C4 differ from the counter value C5 an unauthorized person might have drawn energy from the power distribution grid. In this case the communication node 3 sends a warning message via a data link 7 to another communication node 3' of the next hierarchy level comprising a data processing unit 6' of its own. The communication node 3' forwards the warning message via a communication link 8 to the central control unit 9 comprising a meter data management system 10. In the given simple example the central control unit 9 receives a warning message which can be formed by a single flag bit. The evaluation of the counter values is performed decentrally by the data processing unit 6 of the transformer 3 and not by the central control unit 9.

Furthermore, the communication node 3 can in a possible embodiment not only forward a warning message to the central control unit 9 but perform a reaction by actuating decentrally a corresponding actor 11. For example, a warning lamp 11 can be switched on indicating to a user that the drawn energy does not correspond to the energy measured by the smart energy meters 2-2 to 2-4. From the simple exemplary embodiment shown in Fig. 3 it is evident that a central control unit 9 connected via communication nodes to a plurality of devices generating data such as smart energy meters 2-1 to 2-4 does need less calculation power than a conventional center control unit as shown in Fig. 2.

With the system for decentralised processing of data streams according to the present invention as shown in the exemplary embodiment of Fig. 3 the size of the data streams being passed on to the next level of the communication hierarchy is reduced significantly. Further, not only the size of the data streams is reduced but a local processing of sensor data can be undertaken.

A further advantage of the system for decentralised processing of data streams according to the present invention is that the decentral reaction by a communication node 3 can be performed even when a data link to the central control unit 9 along a communication data path is interrupted. For example, if the communication link 7 between the communication node 3 and the communication node 3' is interrupted a decentral and fast reaction of the communication node 3 can be still performed such as activating the local warning lamp 11.

In a possible embodiment the generated data streams are processed by processing units 6 at one or at all levels of the communication hierarchy. In this way it is possible to provide a local autonomous response by the processing unit 6 independent from the central control unit 9.

In a possible embodiment the communication node 3 comprises a memory for storing the process data. In this way it is possible to perform an analysis of the data if an exceptional situation occurs in the data distribution grid.

In a possible embodiment the data streams are filtered in real time by the data processing units 6 to reduce the size of the data streams before being passed on the next level of the communication hierarchy. The data streams are filtered according to a filter algorithm performed for example by the data processing unit 6 of a data stream database.

In a possible embodiment the local processing unit 6 of the communication node performs a CPA-algorithm (CPA: Principal Component Analysis) to detect network anomalies of the power distribution network.

Data links between the communication nodes 3 of the communication hierarchy can be formed by data lines or by data busses. In an alternative embodiment the communication links are formed by power lines of the power distribution grid such as BPL (Broad Band Power Line). The devices 2-1 to 2-4 can be formed by any devices which generate or forward data, in particular, by any kind of sensors.

The communication links between the communication nodes 3 of the communication hierarchy as well as the data links 4 can be wired data links. In an alternative embodiment the data links are wireless communication links. The devices 2 can be also be formed by mobile devices communicating with the communication node 3 via the wireless interface. The transformer 3 receives a data stream from several smart meters in the exemplary embodiment shown in Fig. 3. Each transformer 3 applies in a possible embodiment in real time filter algorithm to the data streams and forwards the results to the communication node 3' which can be formed by a substation. This substation aggregates data streams from many transformers 3. In a possible embodiment the substation processing unit 6' also applies a filter algorithm before forwarding the data on to the central control unit 9. The central control unit 9 can use the supplied filtered data to view the current state of the power distribution network.

## Claims

1. A system for decentralised processing of data streams generated by a plurality of devices (2) installed in a power distribution grid,
wherein said devices (2) are connected via communication nodes (3, 3') to a central control unit (9),
wherein the generated data streams are processed by data processing units (6, 6') of said communication nodes (3, 3') to provide a local autonomous response, wherein the local autonomous response is provided independent from said central control unit (9); and
wherein the data streams are filtered in real time by said data processing units (6, 6') to reduce the size of said data streams before being passed on to the next level of a communication hierarchy formed by the communication nodes (3, 3') comprising said data processing units (6, 6').

2. The system according to claim 1,
wherein the data processing units (6, 6') store the processed data in memories of the respective communication nodes (3).

3. The system according to claim 1,
wherein said devices (2) comprise sensors of said power distribution grid which generate sensor data.

4. The system according to claim 3,
wherein the sensors comprise phasor management units (PMU).

5. The system according to claim 1,
wherein said data processing units (6, 6') are provided at substations and data aggregation nodes.

6. The system according to claim 1,
wherein said data streams are filtered according to a filter algorithm performed by a data processing unit (6, 6') of a data stream database.

7. The system according to claim 1,
wherein said processed data streams are transmitted to said central control unit (9) via data lines or via power lines of said power distribution grid.

8. A method for processing of data streams generated by a plurality of devices (2) installed in a power distribution grid,
wherein the generated data streams are processed decentrally by processing units (6, 6') of communication nodes (3, 3'), which connect said devices (2) to a central control unit (9), to provide a local autonomous response, wherein the local autonomous response is provided independent from said central control unit (9); and
wherein the data streams are filtered in real time by said data processing units (6, 6') to reduce the size of said data streams before being passed on to the next level of a communication hierarchy formed by the communication nodes (3, 3') comprising said data processing units (6, 6').

9. A computer program comprising commands for performing the method of claim 8.

10. A data carrier which stores a computer program according to claim 9.

## Patentansprüche

1. System für die dezentrale Verarbeitung von Datenströmen, die von mehreren in einem Stromverteilungsnetz installierten Geräten (2) erzeugt werden,
wobei die Geräte (2) über Kommunikationsknoten (3, 3') mit einer zentralen Steuereinheit (9) verbunden sind,
wobei die erzeugten Datenströme von Datenverarbeitungseinheiten (6, 6') der Kommunikationsknoten (3, 3') verarbeitet werden, um eine autonome lokale Antwort zu liefern, wobei diese unabhängig von der zentralen Steuereinheit (9) bereitgestellt wird, und
wobei die Datenströme von den Datenverarbeitungseinheiten (6, 6') in Echtzeit gefiltert werden, um die Größe der Datenströme zu reduzieren, bevor sie zur nächsten Ebene einer Kommunikationshierarchie weitergeleitet werden, die von den Kommunikationsknoten (3, 3') gebildet wird, welche die Datenverarbeitungseinheiten (6, 6') umfassen.

2. System nach Anspruch 1,
bei dem die Datenverarbeitungseinheiten (6, 6') die verarbeiteten Daten in Speichern der entsprechenden Kommunikationsknoten (3) speichern.

3. System nach Anspruch 1,
bei dem die Geräte (2) Sensoren des Stromverteilungsnetzes umfassen, die Sensordaten erzeugen.

4. System nach Anspruch 3,
bei dem die Sensoren Phasor Management Units (PMU) umfassen.

5. System nach Anspruch 1,
bei dem sich die Datenverarbeitungseinheiten (6, 6') an Unterstationen und Datenaggregationsknoten befinden.

6. System nach Anspruch 1,
bei dem die Datenströme einem Filteralgorithmus entsprechend gefiltert werden, der von einer Datenverarbeitungseinheit (6, 6') einer Datenstrom-Datenbank ausgeführt wird.

7. System nach Anspruch 1,
bei dem die verarbeiteten Datenströme über Daten- oder Stromleitungen des Stromverteilungsnetzes zur zentralen Steuereinheit (9) übertragen werden.

8. Verfahren für die Verarbeitung von Datenströmen, die von mehreren in einem Stromverteilungsnetz installierten Geräten (2) erzeugt werden,
wobei die erzeugten Datenströme von Datenverarbeitungseinheiten (6, 6') der Kommunikationsknoten (3, 3'), welche die Geräte (2) mit einer zentralen Steuereinheit (9) verbinden, dezentral verarbeitet werden, um eine autonome lokale Antwortreaktion zu liefern, wobei diese unabhängig von der zentralen Steuereinheit (9) bereitgestellt wird, und
wobei die Datenströme von den Datenverarbeitungseinheiten (6, 6') in Echtzeit gefiltert werden, um die Größe der Datenströme zu reduzieren, bevor sie zur nächsten Ebene einer Kommunikationshierarchie weitergeleitet werden, die von den Kommunikationsknoten (3, 3') gebildet wird, welche die Datenverarbeitungseinheiten (6, 6') umfassen.

9. Computerprogramm, das Befehle für das Ausführen des Verfahrens nach Anspruch 8 umfasst.

10. Datenträger, der ein Computerprogramm nach Anspruch 9 speichert.

## Revendications

1. Système pour un traitement décentralisé de flux de données générés par une pluralité de dispositifs (2) installés dans un réseau de distribution d'énergie,
dans lequel lesdits dispositifs (2) sont connectés par l'intermédiaire de noeuds de communication (3, 3') à une unité de commande centrale (9),
dans lequel les flux de données générés sont traités par des unités de traitement de données (6, 6') desdits noeuds de communication (3, 3') pour fournir une réponse autonome locale, dans lequel la réponse autonome locale est fournie indépendamment de ladite unité de commande centrale (9) ; et dans lequel les flux de données sont filtrés en temps réel par lesdites unités de traitement de données (6, 6') pour réduire la taille desdits flux de données avant qu'ils ne soient envoyés au niveau suivant d'une hiérarchie de communication formée par les noeuds de communication (3, 3') comprenant lesdites unités de traitement de données (6, 6').

2. Système selon la revendication 1,
dans lequel les unités de traitement de données (6, 6') stockent les données traitées dans des mémoires des noeuds de communication (3) respectifs.

3. Système selon la revendication 1,
dans lequel lesdits dispositifs (2) comprennent des capteurs dudit réseau de distribution d'énergie qui génèrent des données de capteurs.

4. Système selon la revendication 3,
dans lequel les capteurs comprennent des unités de gestion de phaseurs (PMU).

5. Système selon la revendication 1,
dans lequel lesdites unités de traitement de données (6, 6') sont prévues au niveau de sous-stations et de noeuds d'agrégation de données.

6. Système selon la revendication 1,
dans lequel lesdits flux de données sont filtrés conformément à un algorithme de filtrage mis en oeuvre par une unité de traitement de données (6, 6') d'une base de données de flux de données.

7. Système selon la revendication 1,
dans lequel lesdits flux de données traités sont transmis à ladite unité de commande centrale (9) par l'intermédiaire de lignes de données ou par l'intermédiaire de lignes électriques dudit réseau de distribution d'énergie.

8. Procédé de traitement de flux de données générés par une pluralité de dispositifs (2) installés dans un réseau de distribution d'énergie,
dans lequel les flux de données générés sont traités de façon décentralisée par des unités de traitement (6, 6') de noeuds de communication (3, 3'), qui connectent lesdits dispositifs (2) à une unité de commande centrale (9), pour fournir une réponse autonome locale, dans lequel la réponse autonome locale est fournie indépendamment de ladite unité de commande centrale (9) ; et
dans lequel les flux de données sont filtrés en temps réel par lesdites unités de traitement de données (6, 6') pour réduire la taille desdits flux de données avant qu'ils ne soient envoyés au niveau suivant d'une hiérarchie de communication formée par les noeuds de communication (3, 3') comprenant lesdites unités de traitement de données (6, 6').

9. Programme informatique comprenant des commandes pour mettre en oeuvre le procédé selon la revendication 8.

10. Porteur de données qui stocke un programme informatique selon la revendication 9.
